# EUROPEAN PATENT APPLICATION

(11) **EP 4 597 347 A1**
(43) Date of publication of application: **06.08.2025**
(21) Application number: 24382107.1
(22) Date of filing: 02.02.2024
(51) Int. Cl.: G06F 21/57, H04W 12/30

(54) **APPLICATION DATA TRANSFER METHOD**

(71) Applicant: Giesecke+Devrient Mobile Security Germany GmbH, 81677 München (DE)
(72) Inventor: PATIÑO, David, 08820 El Prat de Llobregat (ES); RUAU, Federico, 08820 El Prat de Llobregat (ES); GIFRE, Clara, 08820 El Prat de Llobregat (ES); TOLOS, Nadia, 08820 El Prat de Llobregat (ES)
(74) Representative: LKGLOBAL Lorenz & Kopf Patentanwalt Attorney at Law PartG mbB

(57) **Abstract**

A method (100) for transferring application data (21) of at least one application (20) of a first device (10) is provided. The method (100) comprises determining (110), via the operating system (11) and by a corresponding one of the at least one application (20), application data (21) to be transferred, formatting (120), by the at least one application (20), the determined application data (21) and sending (130) the formatted application data (21) to a storage module (30), saving (140) the application data (21) within the storage module (30), retrieving (160) the saved application data (21) from the storage module (30), and restoring (170) the retrieved application data (21) within at least one application (20) by the at least one application (20).

## Description

### TECHNICAL FIELD

The present disclosure relates to a method for transferring application data of at least one application of a device.

### TECHNICAL BACKGROUND

Many security sensitive solutions such as smart cards (for example for payment cards and certain identity documents) but also secure devices other than smart cards (for example Secure Elements or chips within smartphones or other devices) securely store and protect sensitive data and applications. For example, mobile devices are configured to employ electronic subscriber profiles for communicating on mobile networks. Such mobile devices are typically equipped with smart cards containing electronic/embedded Secure Elements (SE), such as electronic/embedded universal integrated circuit cards (eUICCs), smartSD, or smart microSD, to name a few. Compared to software-based solutions, they provide higher security and can protect from attacks from malware, hackers, and other malicious actors.

A secure element is a tamper resistant element (TRE) that provides a secure memory and execution environment within a smart card/device in which application code and application data can be securely stored and administered. The secure element ensures that access to the data stored on the card is provided only when authorized.

Secure elements oftentimes employ the Java Card technology, which is the leading open, interoperable platform for secure elements, enabling smart cards and other tamper-resistant chips to host multiple applications using Java technology. Java Card is an execution platform that can store and update multiple applications on a single resource-constrained device, while retaining the highest certification levels and compatibility with standards.

Java Card is a software technology that allows Java-based applications (applets) to be run securely on smart cards and more generally on similar secure small memory footprint devices (secure elements (SE)). As already mentioned, a Secure Element is not limited to its smart cards and other removable cryptographic tokens form factors; embedded SEs soldered onto a device board and new security designs embedded into general purpose chips are also widely used. Java Card addresses this hardware fragmentation and specificities while retaining code portability brought forward by Java.

Java Card is the tiniest of Java platforms targeted for embedded devices. Java Card gives the user the ability to program the devices and make them application specific. It is widely used in different markets: wireless telecommunications within SIM cards and embedded SIM, payment within banking cards and NFC mobile payment and for identity cards, healthcare cards, and passports. Several IoT products like gateways are also using Java Card based products to secure communications with a cloud service for instance. Java Card utilizes data encapsulation, meaning that data is stored within the application, and Java Card applications are executed in an isolated environment (the Java Card VM), separate from the underlying operating system and hardware.

Sometimes, updates or upgrades of an operating system of such a secure element or other similar device is necessary, for example for feature update or bug fixing purposes. Oftentimes, such upgrades are done via a full memory reprogramming of the secure element, which deletes all the application (or applet) data within the secure element. However, ideally, to avoid the need for complete reprovisioning of the applet, the application data should be kept when the operating system and the applications are updated. To keep the application data, they have to be transferred from the "old" version to the "new" version of the application after the update/upgrade. Also, sometimes application data may have to be transferred from one device to another device, for example from an application in a first device to an application in a second device (e.g., when a user switches devices). For security purposes, such a transfer of the application data of the "old" version of the application is only to be done on the end user side (for example by a phone or smart card manufacturer).

### DESCRIPTION

Therefore, it is an objective to provide a secure method for upgrading an operating system of a device that keeps application data of applications on the device after the upgrade.

This objective is solved by the subject matter of the independent claims. Further embodiments are described in the dependent claims as well as in the following description.

According to an aspect, a method for transferring application data of at least one application of a first device is provided. The method comprises determining, via the operating system and by a corresponding one of the at least one application, application data to be transferred, formatting, by the at least one application, the determined application data and sending the formatted application data to a storage module, saving the application data within the storage module, retrieving the saved application data from the storage module, and restoring the retrieved application data within at least one application by the at least one application.

The first device may, for example, be a secure chip within a smartphone, a smart card, or any other suitable device. For upgrading the operating system and possibly applications of the device while ensuring tamper resistance, but also, as described further below, for example to transfer application data between the first device and a second device, a storage module is provided which is part of the device (for example part of a secure element (SE)) but separate from the operating system itself. Usually (when in regular operation) the device is controlled by an operating system of the device. However, in embodiments where the data transfer serves upgrade the operating system of the first device and retrieving the application data, during the upgrade of the operating system, control over the device may be handed over to the storage module.

The storage module is in communication with the operating system and also may (in corresponding embodiments) load an image of a new (upgraded) operating system onto the device. The storage module comprises a memory for storing an image and also the application data that are saved by the applications and that are later transferred or restored from the storage module. The storage module may communicate with an external entity, such as a corresponding computer device, by any suitable means, such as by physical or wireless communication, to receive a corresponding image of a new operating system.

The transfer of application data (herein also "application data recovery/transfer functionality") between the old version of the corresponding application and the new version is divided into a saving phase and a restoring phase. The "new" version may refer to a new version of the application within the same device after an upgrade of an operating system and software in general. However, in certain embodiments where the data is transferred between devices, "new" version may also refer to an upgraded or the same version of the corresponding application in a second device.

Application data may, in particular, be security sensitive data such as keys, certificates, a PIN, etc. However, it should be appreciated that, in principle, any application data can be saved and restored/transferred by the disclosed method. Personalization of applications with security sensitive data usually occurs within a trusted environment while fabricating the device. For example, such data usually is included in an image of an operating system of the device before the image is loaded onto the device. For example, a key, certificate, or PIN may be included into an image of the operating system of a smart card before the operating system is loaded onto the smart card in a manufacturing plant of the smart card. However, sometimes the operating system has to be upgraded, e.g., for bug fixing purposes. Because of the security sensitive nature of at least some of the application data, this has to be done in a safe and tamper resistant way, in particular in a way that avoids manipulating of the application data from the outside. This is achieved in the present invention in that each application itself is responsible for selecting, saving and recovering its application data and in that the application data is saved in a storage module, that is part of the device (for example a secure element (SE)) itself and therefore never leaves the device during the whole upgrade procedure. In embodiments, where the application data is transferred to a second device, data security is achieved by certain encryption schemes, as described further below with regard to the corresponding embodiment.

The application data recovery/transfer functionality intends to allow the saving and restoring of a set of data belonging to a specific application, via an already provided API for operating system data handling. The restoring may take place in the same (first) device or in a (second) device where the application data is transferred. In other words, the same interface used to upgrade the operating system is used to save (in one device) and restore (in the same device or in another device) the application data. Need for such a mechanism comes from the requirement to be able to maintain dynamic and/or static data from a certain application between operating system upgrades but also for safely transferring data between devices, for example when a user switches devices and wants to keep the application data. One preferred use case therefore is a full memory reprogramming update. Another preferred use case is a device switch where application data is to be kept between devices. However, it should be appreciated that the application data recovery may also be utilized in other update/upgrade situations apart from such a full memory reprogramming. In the context of a full memory reprogramming where application data should be recovered after the upgrade, the saving procedure would take place before full memory reprogramming (being an actual upgrade of the operating system and the applications) and the recovering would occur after that same full memory reprogramming process is completed and the new operating system is booted.

The saving phase takes place before the actual upgrade of the operating system and the applications or before transferring the application data to a second device. First, application data that shall be retained after the upgrade or that shall be transferred to another device is determined by the corresponding application itself but via the operating system (since the applications (for example Java Card applets) are isolated and cannot communicate with the storage module). In other words, the storage module instructs the operating system to inquire (in any suitable way, such as by invoking a certain application interface, for example via a certain interface of a data object of the application) from the applications of the device which application data are to be saved. Such application data may, in a non-limiting example, be user profiles (such as user profiles in payment cards or eSIM user profiles) or similar data. During the upgrade or transfer procedure (apart from an actual upgrade phase in upgrade situations), the operating system of the device acts as a relay between the storage module and the applications. However, the applications do not directly communicate with the storage module.

Once the at least one application (the device may, for example, have a multitude of applications each of which shall have the opportunity to save and restore or transfer its application data) has determined the application data to be saved, the application data are appropriately formatted (for example serialization with added data descriptors, as described further below) such that the application data is also readable and interpretable by the upgraded application version (in upgrade situations) or by the same or upgraded application version (in data transfer situations). In particular, the data is formatted in such a way that it can be saved within the storage module in a memory space saving manner because most of the space within the storage module is needed for image data of new operating systems (and possibly accompanying applications). The formatted data is returned to the operating system which sends the data to the storage module for saving. Alternatively, formatting the application data may also be done by the operating system after receiving the application data from the corresponding application.

In the recovery phase, the application data that has been saved to the storage module in the saving phase is loaded back into the corresponding applications. This may take place in the same (first) device (for example in operating system upgrade situations, where the operating system of the first device is upgraded and the application data should be retained after the upgrade), or in a second device (in situations, in which application data should be transferred to a corresponding application of the second device, for example, when a user switches devices but wants to retain the application data). In both situations, the application data saved beforehand in the saving phase is retrieved from the storage module (either by the storage module of the same first device or by the receiving storage module of another device) basically in the same way as it has been sent to the storage module, but in the opposite direction (meaning the saving and the restoring phase are symmetric with regard to data transfer). In other words, all the application data is sent to the operating system which distributes the corresponding application data to the corresponding applications. The application data for each application may, for example, have a corresponding unique identifier that allow the operating system to distribute each of the application data to the corresponding one of the at least one application. The application then restores the application data appropriately (for example by recreating corresponding Java Card objects in certain embodiments). For this, the application data is first reformatted (for example, if the application data is transferred in a serialized manner, the application data is de-serialized). Just as the formatting, the reformatting may be done by the application itself or by the operating system.

According to an embodiment, the application data to be transferred is application data that is to be restored after an upgrade of an operating system of the first device. The storage module is an internal storage module of the first device. The method further comprises upgrading the operating system by the storage module before retrieving the saved application data. Restoring the retrieved application data comprises restoring the application data within the same application of the first device.

With regard to the above general explanations, this embodiment comprises the already mentioned upgrade situation, in which the application data is to be restored within an application of a single device after the upgrade of the operating system of the first device.

Once all the application data successfully is saved within the storage module, i.e., the saving phase is finished, the actual upgrade procedure begins. The storage module deletes the current operating system along with the applications and all the accompanying data and loads an image of the new (upgraded) operating system onto the device. When the upgrade is finished and the new operating system has booted, the recovery phase of the application data transfer starts, as described above.

According to another embodiment, upgrading the operating system by the storage module comprises transferring control over the first device from the operating system to the storage module, deleting the operating system from the first device by the storage module, loading the upgraded operating system onto the device, and transferring control over the first device to the upgraded operating system.

In normal operation, the operating system of the first device (e.g., a secure element) controls the secure element and executes the applications of the secure element. When upgrading the operating system (especially in the case of a full reprogramming), control needs to be transferred away from the operating system because it has to be deleted and the new version of the operating system needs to be reinitialized/booted. Therefore, the storage module (which is part of the device (e.g., secure element) itself) takes control and performs the upgrade by deleting the old operating system and loading the new operating system onto the device. Afterwards, control over the device (e.g., secure element) is handed back to the new operating system and the recovery phase for the application data may commence, as described further above.

According to another embodiment, the storage module is an internal storage module of the first device. The method further comprises, after saving the application data within the storage module, sending the saved application data from the storage module to a second receiving storage module of another device. The steps of retrieving the application data and restoring the retrieved application data are performed by the receiving storage module to transfer the application data from the first device to the second device.

This embodiment describes an application data transfer situation, wherein the application data of one or more applications of the first device are to be transferred to a second device. The second device may be constructed in the same way as the first device. In particular, it may also comprise a storage module with the corresponding memory components, just as the first device. The (sending) storage module of the first device and the (receiving) storage module of the second device may communicate with each other either directly or by means of an external entity, such as a general purpose computer or also via a Cloud.

The saving phase may be performed by the first device (or rather by its storage module) and the recovery phase may be performed by the second device (or rather its receiving storage module) to which the application data is sent. Apart from that, the discussion of the saving phase and the recovering phase further above is fully valid also for this transfer scheme. However, between the saving phase and the recovery phase, the application data is transferred to the second device either directly or by intermediary external entities, such as general purpose computers.

Optionally, to ensure security, for the transfer situation, in which the application data is send to a second device and restored there, a secure encryption scheme may be applied, having the basic requirement of being strong enough according to the sensitivity of the transferred data. Other requirements such as forward secrecy can be desirable too. For example, both devices may have the means to securely identify and authenticate each other, such as by using a long-term asymmetric key pair, with the public key signed by a trusted entity or chain (Public Key Infrastructure, PKI). The devices may then, for example, securely agree on a single-use key to encrypt the data, by using ephemeral key pairs (for example, Elliptic-Curve Diffie-Hellman Ephemeral, ECDHE), thereby mutually authenticating each other and the key agreement with their long-term keys. The sending (first) device may derive an AES key from the single-use key and may then encrypt the data package with it, so that only the receiving (second) device will be able to decrypt it.

However, this is only one example of an encryption scheme. For example, quantum-resistant algorithms, such as CRYSTALS-Kyber (CRYSTAL: Cryptographic Suite for Algebraic Lattices) and FALCON may also be used.

CRYSTALS-Kyber is an IND-CCA2-secure key encapsulation mechanism (KEM), whose security is based on the hardness of solving the learning-with-errors (LWE) problem over module lattices.

Falcon is a lattice-based signature algorithm.

Both CRYSTAL-Kyber and FALCON are in principle known and will not be described in detail herein.

According to an embodiment, formatting the application data comprises serializing the application data by the at least one application. Sending the application data to the storage module comprises sending the serialized application data to the storage module in a data stream.

For example, the application data of each application that wants to save application data (either for restoring or for transferring) is serialized by the corresponding application (or, alternatively, by the operating system after receiving the application data from the application). Serialization means that the data is transferred in chunks, for example bit by bit, and is streamed in this data form between the operating system and the storage module.

Such a format may be applied over the application data of each application, for example over each Java Card object (where applicable) and contains administrative information, with the minimum required administrative information required to undo the transformation being a part of the format itself. Administrative information contains the key aspects defining the original data object: type of object and type of memory where it is supposed to be stored. This administrative information of the object itself is differentiated from the information in a serialized data descriptor, which applies to the complete serialized data and is therefore different in principle.

The morphology of the serialized application data should make it easy to manipulate them, so that the effort on data processing is minimized. Based on these considerations, the data serialization format may be, for example, the known BER-TLV (Basic Encoding Rules - Tag-length-value), which is a format that is easy to manipulate. Since the BER-TLV is known, it will not be explained in detail herein. Further, it should be appreciated that any other suitable serialized data format may be used, too. The BER-TLV is only one example to more easily understand how serialization may be done. The Tag of the BER-TLV contains information on the type of object and the type of memory. This way, all the necessary information to catalogue the application data is easily accessed together with the application data itself.

Each serialized data object of the application data may be a BER-TLV where the tag identifies the type of object and the kind of memory where it belongs (e.g., Heap, PSM). Additionally and optionally, data can also be secured with a random AES Key (or any other encryption) and/or divided into sub tags depending on the type of object. Sub-Tags may also be BER-TLV formatted, and the tags serve as indicators for the kind of component of the original object. Note that the Tags for each serialized data object type are unique (at least the bits identifying the object Type, while sub-tags are context specific, and so can coincide with sub-tags from different object types but not repeat inside a specific object type division.

Serializing the application data together with the administrative information and possibly data descriptors in particular allow for the memory of the storage module to be used efficiently because each memory segment/granularity, such as a memory page or other memory unit, may be filled completely with application data without any filling or garbage data.

According to another embodiment, saving the application data within the storage module comprises saving the application data within memory granularities of a memory of the storage module.

In particular, serializing the application data, as described above, allows for efficient use of the memory of the storage module, most of which is necessary to store the image of the operating system (and possibly application). Therefore, efficient memory usage is important, which may be achieved in this way because each memory granularity may be completely filled with useful data. Memory granularity may, in non-limiting examples, refer to memory pages or memory blocks (for example of non-volatile memory) or any other form of granularity, depending on the type of memory.

According to another embodiment, the method further comprises attaching data descriptors describing a data type of the saved application data, such that the saved application data can be correlated with a corresponding one of the at least one application.

Such a data descriptor may be attached to each application data when it is stored within the storage module, such that, when the data is received during the recovery phase (either by the same storage module or by a storage module of another device), each data part can be assigned to a corresponding application. For example, each data descriptor may include an Application Identification (AID) of the corresponding application. This also allows to completely fill up memory granularities or blocks with application data and therefore contributes to efficient memory usage.

According to another embodiment, retrieving the application data comprises reformatting the application data into a format suitable for the upgraded at least one application.

According to another embodiment, the device is a Java Card device and the at least one application is a Java Card applet. Restoring the retrieved application data within the application comprises recreating corresponding Java Card objects from the retrieved application data within the application.

In other word, the application data may be Java Card objects of a Java Card applet. These Java Card object may be recreated after receiving the application data from the storage module.

According to another embodiment, the first device is a secure element.

Such a secure element may, e.g., be part of a smart card, of a mobile device such as a smartphone, or any other suitable (in particular security sensitive) device that can benefit from the method disclosed herein. It should be appreciated that in situations, where the method is used to transfer data to a second device, as described further above, the second device may also be such a secure element.

Secure elements are physical components in electronic devices that securely store and protect sensitive data and applications. Compared to software-based solutions, they provide higher security and can protect from attacks from malware, hackers, and other malicious actors. Typical applications for Secure Elements include payment cards, mobile phones, and identification cards.

With the increasing adoption of eSE (embedded Secure Element) and eUICC/eSIM (embedded Universal Integrated Circuit Card / embedded Subscriber Identification Module) and the higher performance of those hardware components, it is possible to integrate multiple applications within a single secure element. This reduces the number of physical devices that users need to carry and simplifies the integration and updating of applications. However, this flexibility also requires higher implementation efforts and places higher security demands on the specific eSE and corresponding systems that install and personalize the secure applications on the secure elements.

According to another embodiment, the secure element is one of a chip in a smart card and a tamper resistant chip in an apparatus.

For example, a chip in a smart card may be a chip in a payment card or identification card. A tamper resistant chip in an apparatus may for example be a tamper resistant element in a mobile phone. Such a Tamper Resistant Element (TRE) is a standalone secure element or secure enclave, consisting of hardware and low-level software providing resistance against logical and physical attacks, capable of hosting secure applications and their confidential and cryptographic data. When the method is used to transfer data between devices, the second device may be configured in the same way or similar to the first device and may in particular also be a chip in a smart card or a TRE in a mobile phone or other device.

According to another embodiment, determining the application data to be transferred comprises sending, by the storage module of the first device, a request for application data to be transferred, the request being relayed by the operating system to the at least one application.

Such a request may be sent at any point in time before starting the saving phase and the actual upgrade phase. For example, the storage module may send a corresponding request to the current operating system of the device. The operating system, on the other hand, relays this request to the applications of the device, e.g., by invoking corresponding application interfaces (API) of the applications. If an application has application data that has to be restored after an upgrade or that has to be transferred to a second device, it returns these application data, which in turn sends them to the storage module of the first device, as described further above.

If an application has no application data to be restored/transferred, it may throw a corresponding exception to the operating system or just ignore the request. The operating system than may send the application data of each application to the storage module one after each other, thereby filling up the associated memory of the storage module.

According to another embodiment, upgrading the operating system comprises a full memory reprogramming of the first device.

A full memory repgrogramming is an upgrade, wherein any previous data within the device (operating system, applications, and application data) are deleted and loaded anew onto the device.

According to another embodiment, the method further comprises performing a consistency check of the application data before restoring the retrieved application data.

According to another embodiment, the method further comprises encrypting the application data prior to sending the application data to the storage module.

This further increases security. Encrypting the data may take place with any suitable encryption protocol, such as AES-protocols, protocols utilizing Elliptical Curve Digital Signature keys (ECDSA), and any other suitable encryption algorithm. Corresponding keys may be included, for example, within data descriptors (in corresponding embodiments), such that the upgraded or receiving (in transfer situations to a second device) application may decrypt the application data.

According to another embodiment, the application data is dynamic data and/or static data of the at least one application.

According to another aspect, a device having an operating system and a storage module is disclosed. The device is configured to perform the above described method according to any of the described embodiments, in order to upgrade the operating system and to restore application data of at least one application of the device or to transfer data to a second device which restores the application data, as described herein.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: A highly schematic representation of a device having an operating system, a plurality of applications comprising application data, and a storage module.
- **Fig. 2**: A flowchart of the method described herein in an upgrading situation, where the operating system of the device of Fig. 1 keeps application data of at least one application of the device.

### DETAILLED DESCRIPTION

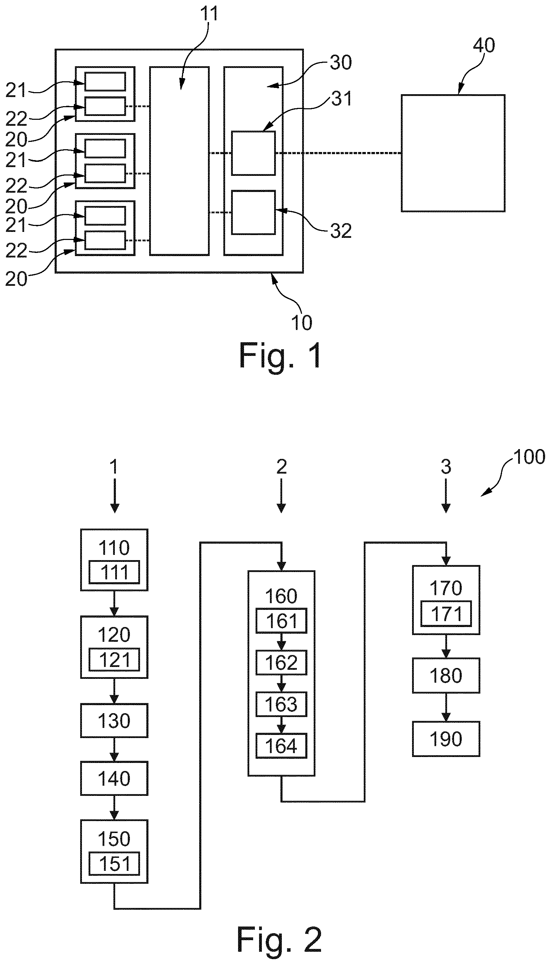

Fig. 1 shows a highly schematic representation of a device 10, for example a Java Card device 10 in the form of a secure element 10, such as a smart card or a tamper resistant element (for example in a smartphone). The device 10 comprises an operating system 11 and a plurality of applications 20 (three applications 20 shown in Fig. 1. However, it should be appreciated that the device 10 may include any number of applications 20) in the form of Java Card applets 20.

Each of the plurality of applications 20 comprises application data 21 and an application interface 22 (for example corresponding methods of objects). Each application 20 can communicate with the operating system 11 via the application interface 22 and each application comprises application data 21, in particular security sensitive application data 21, such as, for example, PINs, keys, eSIM profiles, user profiles in payment cards etc., as described herein further above in detail. However, in principle any application data 21 can be retained or transferred.

The operating system 11 in turn is in communication with a storage module 30, which acts as an update or upgrade agent as well as an data storage and/or transfer agent for the device 10, in particular for the operating system 11 of the device 10. StorageThe storage module 30 comprises at least an image storage 32, for storing an image of a new version of the operating system 11 that is to be installed onto the device 10 during an upgrade procedure, and an application data storage 31. Such an image may, for example, be loaded into the storage module 30 by an external entity 40, such as a general purpose computer which starts the whole application data transfer procedure. The application data storage 32 preferably is a non-volatile memory having memory pages for storing data and is configured to store application data 21 received from the applications 20, before the operating system 11 is to be upgraded or before the application data 21 is sent to a second device 30 (not shown), i.e., to a receiving storage module 30 of such second device 30.

In the following, with reference to the flowchart in Fig. 2 and with continued reference to Fig. 1, a method 100 for upgrading the operating system 11 of the device 10, which retains application data 21 after the upgrade of the operating system 11 is described. It should be appreciated that the upgrade situation, as described with regard to Fig. 2, is only one possible and exemplary implementation of the method 100. Other implementations may include transferring the application data 21 to a second device 10, such that the restoring phase 3, as described below, is performed by the second device 10, while the saving phase 1 is performed by the first device 10. In such applications, the step of upgrading 160 the operating system 11 may be replaced with a step of transferring 160 the application data 21 to the second device 10 and steps 161 to 164 may be void.

The method 100 for upgrading the operating system is divided in three phases 1, 2, 3: a saving phase 1, an upgrading (or transferring) phase 2 and a restoring phase 3. The three phases 1, 2, and 3 are performed in a consecutive manner.

In the saving phase 1, the application data 21 of at least one of the applications 20 of the device 10 (see Fig. 1) are saved within the storage module 30 (or rather in its application data storage 31, which is a part of the memory of the storage module 30).

For this, first, application data 21 to be saved are determined in step 110. For determining 110 the application data to be saved, the storage module 30 may, for example, send a request for application data 21 to be saved to the current operating system 11. The operating system 11, in turn, relays this request preferably to all of the applications 20, for example by invoking a corresponding function or method of each of the applications 20 via the corresponding application interfaces 22, to inquiry whether any of the applications 20 has application data 21 which are to be restored after the upgrade of the operating system 11.

Once the application data 21 to be retained has been determined, each of the applications 20 formats the application data 21 in step 120 in an appropriate way, such that it can be read by an upgraded (or same) version of the application 20 after the operating system 11 has been upgraded and/or after the application data 21 has been transferred to a second device 10. For this, the application data 21 of a corresponding application 20 may, for example, be serialized in step 121, and administrative information and/or data descriptors may be added to the serialized application data 121. However, the data descriptors may also be added later, after sending the application data 21 to the storage module 30. The formatting 120 of the application data 21 may be done by the application 20 itself or by the operating system 11. In either case, the application data 21 is first returned to the operating system 11 (as a response to the request in step 111), which sends the formatted (e.g., serialized, as described herein) application data 21 to the storage module 30 (of the first device 10 in data transfer situations) in step 140. In particular, sending 140 the application data 21 to the storage module 30 is done in data chunks and one application data 21 (of one application 20) after the other. Optionally, the application data may be encrypted in step 130 before sending them to the storage module 30. Encrypting 130 the application data 21 may be done by the application 20 itself or by the operating system 11.

In step 150, the application data 21 is saved within the storage module 30, in particular in memory pages of the application data storage 31. However, it should be appreciated that the application data storage 31 and the image storage 32 may be a shared memory. Since almost all of the available storage within the storage module 30 is needed for the image data of the new operating system 11, efficient usage of data is necessary when storing the application data 21. This is in particular achieved by the serialized nature of the sending and storing the application data 21 because in this way, memory pages of the storage can be completely filled with useful data without having to resort to filling or garbage data, such as by padding with zeros. In Step 151, the above already mentioned data descriptors may be added to the saved application data 21, if not already happened.

After all the application data 21 is saved within the storage module 30, the saving phase 1 is finished and the upgrading phase 2, or the transfer phase 2 in application data transfer situations, as described herein, starts. In the latter case, the following discussion of the upgrading phase 2 is replaced by transferring the application data 21 to a receiving storage module 30 of a second device 10, possibly with encrypting the data beforehand, as described herein further above.

In the upgrading phase 2, the operating system 11 is upgraded by the storage module 30 in step 160. For this, first, control over the device 10 is handed over to the storage module 30 in step 161. In step 162, the current operating system 11 is deleted by the storage module 30 and the new operating system 11, possibly together with upgraded versions of the applications 20, is loaded (i.e., flashed) into the device 10 by the storage module 30 in step 163. After the new operating system 11 has been loaded into the device 10, control over the device 10 is transferred back to the newly installed operating system 11, e.g., by booting up the operating system 11 and the upgrading phase 2 ends.

In the restoring phase 3, the application data 21 saved to the storage module 30 of the first device 10 in the saving phase 1 (and in data transfer situations transferred to a receiving storage module 30 of a second device 10) is restored to the upgraded or same version applications 20. In particular, in step 170, the saved application data 21 is send by the corresponding storage module 30 back to the operating system 11, i.e. retrieved by the operating system 21, which, in turn, sends the application data 21 via the corresponding application interfaces 22 to the applications 20. The application data 21 can be correlated to the corresponding application via the administrative information and/or the data descriptors that have been added to the application data 21. Such data may, for example, include application IDs (AIDs), as described herein further above. In step 171, the retrieved application data 21 is reformatted appropriately into a format usable by the corresponding application 20, for example by de-serializing the application data 21, as also already described herein. If the application data has been encrypted in the saving phase 1, the application data 21 may also be encrypted during this step.

Once the application data 21 has been retrieved and reformatted, the application data 21 is restored within the corresponding application 20 within the application 20. Optionally, either the operating system 11 or the corresponding application 20 may perform a consistency check of the retrieved application data 21 in step 190 before or after restoring the application data 21. Preferably, such a consistency check is done before restoring 180 the application data 21 within the application 20 to avoid security risks by manipulated data.

In particular by leaving all the saving and restoring of application data 21 in the responsibility of the applications 20 itself and by storing the application data 21 within the device 10 (for example within a secure data storage within a Secure Element 10 as the device 10), the probability for manipulations from the outside is greatly reduced, thereby providing a secure way of keeping application data 21 when the operating system 11 of the device 10 (such as a secure element 10) is upgraded. In data transfer situations, the same effect is achieved by encrypting the data appropriately before sending them to a second device 10. Also, because the applications 20 itself are responsible for formatting and reformatting the application data 21, compatibility with upgraded versions of the applications 20 is left in the responsibility of the applications 20 itself.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 10: (Java Card) device, secure element
- 11: operating system
- 20: application, (Java Card) applet
- 21: application data
- 22: application interface
- 23: Java Card object
- 30: storage module
- 31: application data storage
- 32: image storage
- 40: external entity
- 100: method
- 110: determining application data
- 111: sending request for application data
- 120: formatting application data
- 121: serializing application data
- 130: encrypting application data
- 140: sending application data
- 150: saving application data
- 151: attaching data descriptors
- 160: upgrading operating system / transferring application data to second device
- 161: transferring control to storage module
- 162: deleting operating system from device
- 163: loading upgraded operating system into device
- 164: transferring control to upgraded operating system
- 170: retrieving saved application data
- 171: reformatting application data
- 180: restoring application data
- 190: performing consistency check

## Claims

1. A method (100) for transferring application data (21) of at least one application (20) of a first device (10), the method (100) comprising:
determining (110), via the operating system (11) and by a corresponding one of the at least one application (20), application data (21) to be transferred;
formatting (120), by the at least one application (20), the determined application data (21) and sending (140) the formatted application data (21) to a storage module (30);
saving (150) the application data (21) within the storage module (30);
retrieving (170) the saved application data (21) from the storage module (30); and
restoring (180) the retrieved application data (21) within at least one application (20) by the at least one application (20).

2. The method (100) of claim 1, wherein the application data (21) to be transferred is application data (21) that is to be restored after an upgrade of an operating system (11) of the first device (10);
wherein the storage module (30) is an internal storage module (30) of the first device (10);
wherein the method (100) further comprises upgrading (160) the operating system (11) by the storage module (30) before retrieving (170) the saved application data (21); and
wherein restoring (180) the retrieved application data (21) comprises restoring (180) the application data (21) within the same application (20) of the first device (10).

3. The method (100) of claim 2, wherein upgrading (160) the operating system (11) by the storage module (30) comprises:
transferring (161) control over the first device (10) from the operating system (11) to the storage module (30);
deleting (162) the operating system (11) from the first device (10) by the storage module (30);
loading (163) the upgraded operating system (11) onto the device (10); and transferring (164) control over the device (10) to the upgraded operating system (11).

4. The method (100) of claim 1, wherein the storage module (30) is an internal storage module (30) of the first device (10), the method (100) further comprising:
after saving (150) the application data (21) within the storage module (30), sending the saved application data (21) from the storage module (30) to a second receiving storage module (30) of another device (10); and
wherein the steps of retrieving (170) the application data (21) and restoring (180) the retrieved application data (21) are performed by the receiving storage module (30) to transfer the application data (21) from the first device (10) to the second device (10).

5. The method (100) of any one of the preceding claims, wherein formatting (120) the application data (21) comprises serializing (121) the application data (21) by the at least one application (20); and
wherein sending (140) the application data (21) to the storage module (30) comprises sending (140) the serialized application data (21) to the storage module (30) in a data stream.

6. The method (100) of any one of the preceding claims, wherein saving (150) the application data (21) within the storage module (30) comprises saving (150) the application data within memory granularities of a memory of the storage module (30).

7. The method (100) of any one of the preceding claims, further comprising attaching (151) data descriptors describing a data type of the saved application data (21), such that the saved application data (21) can be correlated with a corresponding one of the at least one application (20).

8. The method (100) of any one of the preceding claims, wherein retrieving (170) the application data (21) comprises reformatting (171) the application data (121) into a format suitable for the at least one application (20).

9. The method (100) of any one of the preceding claims, wherein the first device (10) is a Java Card device (10) and wherein the at least one application (20) is a Java Card applet (20); and
wherein restoring (180) the retrieved application data (21) within the application (20) comprises recreating corresponding Java Card objects (23) from the retrieved application data (21) within the application (20).

10. The method (100) of any one of the preceding claims, wherein the first device (10) is a secure element (10).

11. The method (100) of any one of the preceding claims, wherein determining (110) the application data (21) to be transferred comprises sending (111), by the storage module (30) of the first device (10), a request for application data (21) to be) transferred, the request being relayed by the operating system (11) to the at least one application (20).

12. The method (100) of any one of the preceding claims, wherein upgrading (160) the operating system (11) comprises a full reflash of the device (10).

13. The method (100) of any one of the preceding claims, further comprising performing (190) a consistency check of the application data (21) before restoring (170) the retrieved application data (21).

14. The method (100) of any one of the preceding claims, further comprising encrypting (130) the application data (21) prior to sending (130) the application data (21) to the storage module (30).

15. The method (100) of any one of the preceding claims, wherein the application data (21) is dynamic data and/or static data of the at least one application (20).
